# EUROPEAN PATENT SPECIFICATION

(11) **EP 2 387 657 B1**
(45) Date of publication and mention of the grant of the patent: **02.01.2019**
(21) Application number: 10700201.6
(22) Date of filing: 11.01.2010
(51) Int. Cl.: F02B 37/22, F02C 6/12, F01D 9/02

(54) **A TURBOCHARGER WITH A INCREASING CROSS-SECTION EXHAUST CASING**
TURBOLADER MIT VERGRÖSSERUNG DES QUERSCHNITTS DES ABGASESGEHÄUSES
TURBOCOMPRESSEUR AVEC SECTION CROISSANTE DU CANAL POUR GAZ D'ÉCHAPPEMENT

(30) Priority: 15.01.2009 US 354623
(43) Date of publication of application: 23.11.2011
(73) Proprietor: General Electric Company, Schenectady, NY 12345 (US)
(72) Inventor: LORINGER, Daniel, Edward, Erie, PA 16510 (US); FURMAN, Anthony, Holmes, Scotia, NY 12302 (US); SWENSON, Kendall, Roger, Erie, PA 16510 (US); LADOON, Dale, William, Niskayuna, NY 12309 (US)
(74) Representative: Illingworth-Law, William Illingworth
(86) International application number: PCT/US2010/020627
(87) International publication number: WO 2010/083126

(56) References cited:
- EP-A1- 1 806 489
- WO-A1-2004/101977
- US-A- 2 465 846
- US-A- 2 641 442
- US-A- 3 355 878

## Description

### BACKGROUND

The disclosure relates generally to a system and method of improving the performance of a turbocharger for a compression-ignition engine and, more specifically, to a system and method for adjusting the position of and parameters of turbocharger components.
WO 2004/101977 A1 discloses a turbocharged diesel engine. An outlet diffuser is placed after a low-pressure turbine and opens out into an exhaust collector. EP1806489 shows the technical features of the preamble of independent claim 1.

Turbochargers include a turbine and a compressor that may be connected by a shaft. The turbine is located in a turbine stage section of the turbocharger, and the components in the turbine stage are important factors in turbocharger efficiency and performance. In particular, components that affect exhaust flow, such as a turbo casing and diffuser, may allow undesirable loss of energy from exhaust flow if not properly designed.

### BRIEF DESCRIPTION

The present invention provides a turbocharger as defined in claim 1.

A turbocharger system, in certain embodiments, includes a compressor, a turbine, a shaft coupling the compressor to the turbine, and a turbo casing configured to improve pressure recovery, wherein the turbo casing includes a non symmetrical geometry configured to improve flow towards an exhaust outlet.

### DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of an embodiment of a system having an engine coupled to a turbocharger with an improved turbine stage;
FIG. 2 is a cutaway side view of an embodiment of a turbocharger having an improved turbine stage;
FIG. 3 is a detailed cutaway side view of an embodiment an improved turbine stage, as illustrated in FIG. 2;
FIG. 4 is a cutaway end view of an embodiment of a turbocharger having an improved turbine stage;
FIG. 5A is a detailed cutaway side view of an embodiment of a turbo casing of an improved turbocharger taken along line 5A-5A of FIG. 4;
FIG. 5B is a detailed cutaway side view of an embodiment of a turbo casing of an improved turbocharger taken along line 5B-5B of FIG. 4;
FIG. 5C is a detailed cutaway side view of an embodiment of a turbo casing of an improved turbocharger taken along line 5C-5C of FIG. 4;
FIG. 6A is a detailed cutaway side view of an embodiment of a turbo casing of an improved turbocharger, illustrating cross sectional areas of an exhaust diffuser and a turbo casing;
FIG. 6B is a cutaway end view of an embodiment of a turbocharger having an improved turbine stage;
FIG. 7 is a chart of the circumferential location within two turbochargers plotted against a ratio of cross sectional areas of the turbo casing to the exhaust diffuser, as shown in FIGS. 6A and 6B; and
FIG. 8 is a chart of expansion ratio plotted against normalized turbine efficiency for two turbocharger designs.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

As discussed in detail below, various configurations of turbine stage components may be employed to reduce energy loss from restricted exhaust flow and to improve turbocharger performance. In particular, an exhaust diffuser with a bell mouth portion may be added to the turbine stage along with a repositioning of a rotor, thereby avoiding an increase in backpressure that may occur when modifying the diffuser. For example, a bell mouth may be added instead of a straight edge to extend a diffuser, along with a repositioning of the rotor disc closer to the inlet and transition section of the turbocharger, thereby improving pressure recovery as the exhaust flows out of the turbine stage. In addition, the turbo casing may be modified to work in conjunction with the exhaust diffuser to improve pressure recovery, thereby increasing turbocharger efficiency. The embodiments discussed below improve turbocharger performance and efficiency by modifying and repositioning components in the turbine stage and exhaust path. The embodiments and pressure recovery improvements may apply to turbochargers, turbo machines, turbo expanders, turbines, and other turbine machinery.

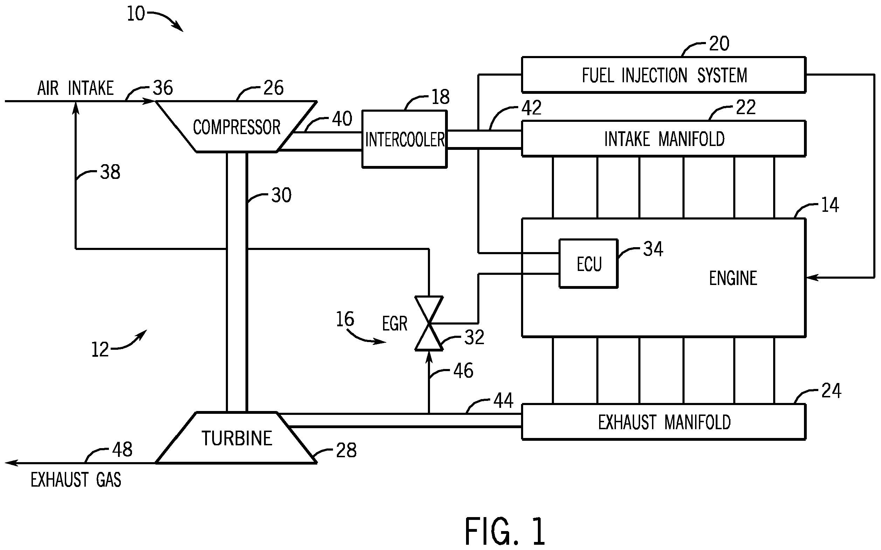

FIG. 1 is a block diagram of a system 10 having a turbocharger 12 coupled to an engine 14, in accordance with certain embodiments of the present technique. The system 10 may include a vehicle, such as a locomotive, an automobile, a bus, or a boat. Alternatively, the system 10 may include a stationary system, such as a power generation system having the engine 14 coupled to a generator. The illustrated engine 14 is a compression-ignition engine, such as a diesel engine. However, other embodiments of the engine 14 include a spark-ignition engine, such as a gasoline-powered internal combustion engine.

As illustrated, the system 10 includes an exhaust gas recirculation (EGR) system 16, an intercooler 18, a fuel injection system 20, an intake manifold 22, and an exhaust manifold 24. The illustrated turbocharger 12 includes a compressor 26 coupled to a turbine 28 via a drive shaft 30. The EGR system 16 may include an EGR valve 32 disposed downstream from the exhaust manifold 24 and upstream from the compressor 26. In addition, the system 10 includes a controller 34, e.g., an electronic control unit (ECU), coupled to various sensors and devices throughout the system 10. For example, the illustrated controller 34 is coupled to the EGR valve 32 and the fuel injection system 20. However, the controller 34 may be coupled to sensors and control features of each illustrated component of the system 10, among many others.

As illustrated in FIG. 1, the system 10 intakes air into the compressor 26 as illustrated by arrow 36. In addition, as discussed further below, the compressor 26 may intake a portion of the exhaust from the exhaust manifold 24 via control of the EGR valve 32 as indicated by arrow 38. In turn, the compressor 26 compresses the intake air and a portion of the engine exhaust and outputs the compressed gas to the intercooler 18 via a conduit 40. The intercooler 18 functions as a heat exchanger to remove heat from the compressed gas as a result of the compression process. As appreciated, the compression process typically heats up the intake air, and thus is cooled prior to intake into the intake manifold 22. As further illustrated, the compressed and cooled air passes from the intercooler 18 to the intake manifold 22 via conduit 42.

The intake manifold 22 then routes the compressed gas into the engine 14. The engine 14 then compresses this gas within various piston cylinder assemblies, e.g., 4, 6, 8, 10, 12, or 16 piston cylinder assemblies. Fuel from the fuel injection system 20 is injected directly into engine cylinders. The controller 34 may control the fuel injection timing of the fuel injection system 20, such that the fuel is injected at the appropriate time into the engine 14. The heat of the compressed air ignites the fuel as each piston compresses a volume of air within its corresponding cylinder.

In turn, the engine 14 exhausts the products of combustion from the various piston cylinder assemblies through the exhaust manifold 24. The exhaust from the engine 14 then passes through a conduit 44 from the exhaust manifold 24 to the turbine 28. In addition, a portion of the exhaust may be routed from the conduit 44 to the EGR valve 32 as illustrated by arrow 46. At this point, a portion of the exhaust passes to the air intake of the compressor 26 as illustrated by the arrow 38, as mentioned above. The controller 34 controls the EGR valve 32, such that a suitable portion of the exhaust is passed to the compressor 26 depending on various operating parameters and/or environmental conditions of the system 10. As depicted, the exhaust gas drives the turbine 28, such that the turbine rotates the shaft 30 and drives the compressor 26. The exhaust gas then passes out of the system 10 and particularly the turbine 28, as indicated by arrow 48. As compressor 26 is driven, additional air intake occurs, thereby improving performance, power density, and efficiency in the engine by providing additional air for the combustion process.

As will be discussed in detail below, optimization and modification of certain components in the turbine stage portion of the turbocharger may reduce energy loss and improve performance of the turbocharger system. For example, the disclosed embodiments may include a modified configuration of the turbo casing to reduce exhaust flow separation thereby improving exhaust flow to a muffler and improving turbocharger efficiency. In addition, the arrangement and design of the exhaust diffuser and axial location of the turbine stage improve pressure recovery within the system, further enhancing exhaust flow and system efficiency through reduced back pressure on the engine. The disclosed embodiments also improve turbocharger performance across various conditions, including during both high and low speed operation. These enhancements improve performance and fuel efficiency of the turbocharger system and engine.

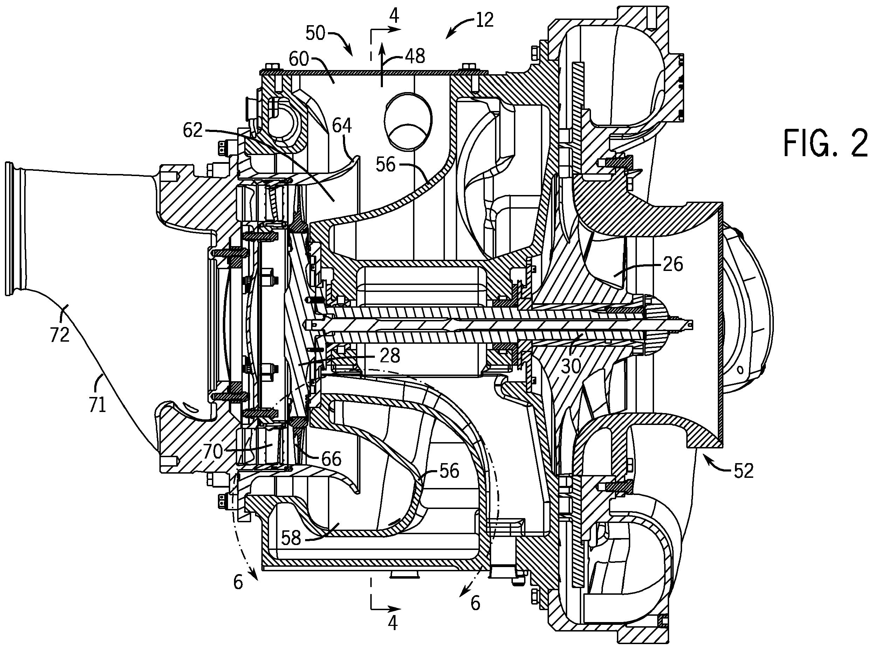

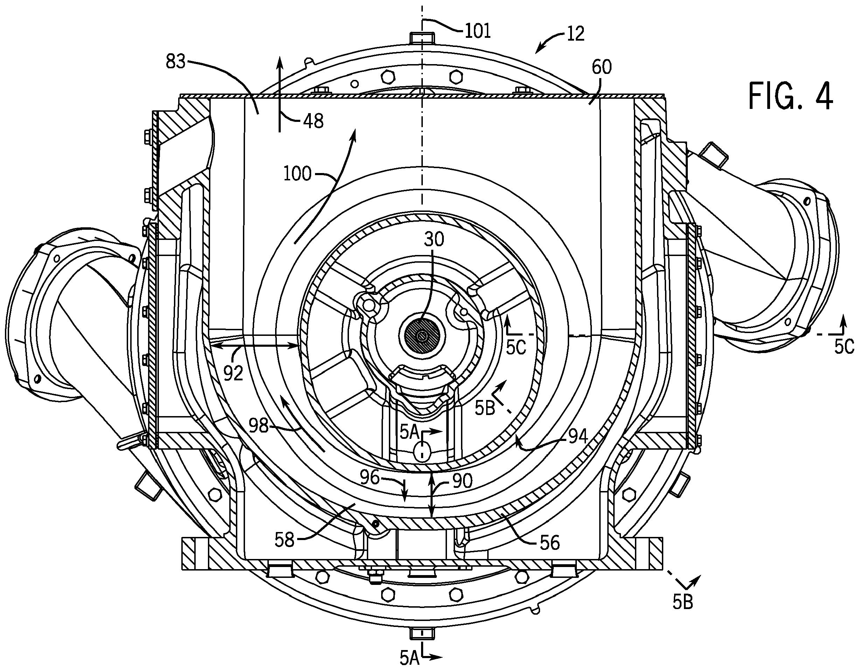

FIG. 2 is a sectional side view of an embodiment of improved turbocharger 12. In the embodiment, turbine stage portion 50 includes several components and modifications that improve efficiency and performance of the turbocharger 12. As depicted, compressor end 52 includes compressor 26 (e.g., compressor blades), which is attached to shaft 30 and turbine 28 (e.g., turbine blades). In the arrangement, the rotation of turbine 28 causes compressor 26 to rotate, thereby compressing air within the turbocharger 12 to increase air density for intake manifold 22. In the embodiment, turbo casing 56 encompasses a cavity which may be described as torus shaped, and allows exhaust to flow and exit, as depicted by arrow 48. Turbocharger exhaust may flow inside turbo casing 56 and be directed from lower section 58 toward the exhaust port in upper section 60. Exhaust may be routed into turbo casing 56 by exhaust diffuser 62, which features a bell mouth or curve shaped cross-section 64, thereby enhancing exhaust flow and improving pressure recovery in turbocharger 12. For example, exhaust flow from diffuser 62 may encounter less resistance as it flows toward exhaust outlet and upper portion 60, thereby improving performance and efficiency. Turbine buckets 66 may be radially located on turbine 28, thereby rotating the turbine 28 as exhaust flows through the turbine buckets 66. Exhaust may flow through nozzle ring 70 en route to turbine bucket 66 and turbo casing 56. Exhaust may enter a portion of turbocharger 12 via transition section 72, which may be optimized to enhance exhaust flow of the improved turbocharger design 12. For example, turbocharger exhaust may flow through optimized transition section 72, nozzle ring 70, turbine buckets 66, exhaust diffuser 62, and turbo casing 56, thereby driving rotation of turbine rotor 28 and flowing exhaust through the improved exhaust diffuser 62 and turbo casing 56. The diagram also includes sectional lines 4 that illustrate a sectional plane used in FIG. 4. In an exemplary embodiment, transition section 72 may have a curvature configured to reduce flow separation of the flow entering turbocharger 12. For example, transition section 72 may have two inlets having walls 71 that gradually curve inward, rather than abruptly angled, to reduce the likelihood of flow separation.

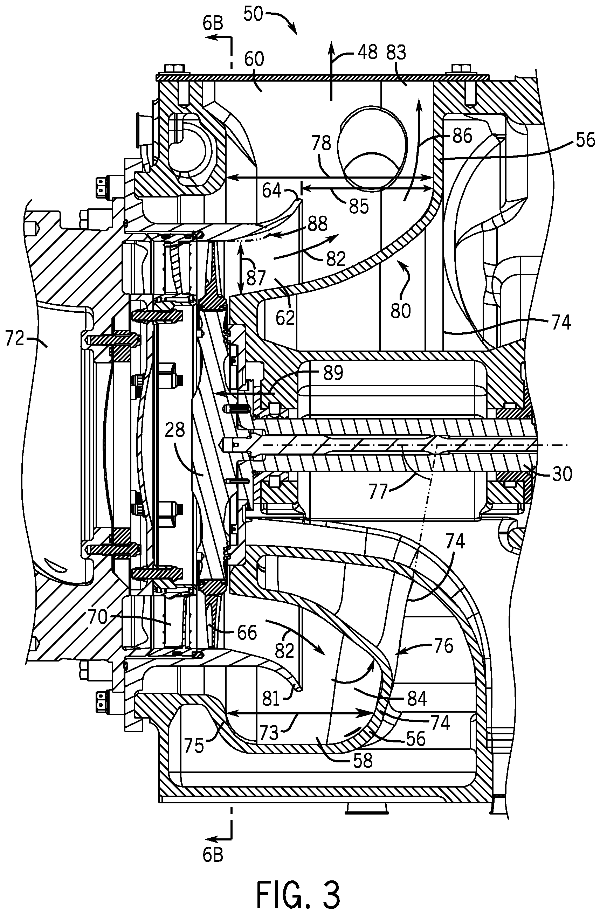

FIG. 3 is a detailed sectional side view of an embodiment of turbocharger 12, as shown in FIG. 2. As depicted, turbine stage portion 50 has several improvements that are designed to improve turbocharger performance and enhance exhaust flow through exhaust diffuser 62 and turbo casing 56. In the embodiment, the cavity enclosed by turbo casing 56 may include an axial or lateral distance 73 between casing walls 74 and 75, which may vary depending upon the circumferential location within the torus-shaped turbo casing 56. Specifically, due to turbo casing cross section geometry 76, distance 73 may be less in lower portion 58 than distance 78 in upper portion 60. As illustrated, interior casing wall 74 expands in a direction of exhaust flow from lower casing portion 58 to upper casing portion 60. Further, an angle 77 of an interior wall 74 of the lower half of the turbo casing, including lower portion 58, is about 75 to 80 degrees relative to an axis through the shaft 30. In addition, upper casing cross section geometry 80 illustrates a change in casing geometry as compared to lower casing geometry 76. In an embodiment, the edge of bell mouth 64 may be a distance 81 from the turbine 28. For example, distance 81 may be about 3 to about 7 inches (about 7.6 to about 17.8cm). Turbocharger exhaust may flow through turbine buckets 66 and exhaust diffuser 62, as indicated by arrow 82 into turbo casing 56. In lower portion 58, exhaust flow may be routed upward toward an exhaust port 83, as indicated by arrow 84. Exhaust may flow from direction 84 to direction 86 toward the exhaust port 83, wherein distance 78 and other turbo casing components enable improved exhaust flow and reduced flow attachment, thereby improving turbocharger efficiency.

In an exemplary embodiment, bell mouth 64 of exhaust diffuser 62 may be shaped and positioned to improve pressure recovery in turbocharger 12. For example, bell mouth 64 may have an axial distance 85 and a radial distance 87 from a wall of turbo casing, which distances may be configured to improve pressure recovery. In an embodiment, the bell mouth 64 extends axially (in the direction of shaft 30 axis) about 30-50% into a cavity of the turbo casing 56. Specifically, the distance 78 minus distance 85 may be about 30-50% of distance 78, therefore the bell mouth 64 extends about 30-50% into the cavity. Further, in a first bottom portion 58 of the bell mouth 64 extends about 50% into the cavity. In a second portion, near exhaust outlet 83 and opposite portion 58, the bell mouth 64 extends about 30% into the cavity.

The diagram also includes dashed lines depicting an alternate exhaust diffuser profile 88, which may be described as a flat diffuser profile, as compared to the curved cross section 64 of bell shaped diffuser 62, which increases turbocharger efficiency. The improvements illustrated in turbine stage portion 50, including an expanding cross sectional area of turbo casing 56 toward an exhaust flow port as well as bell shaped exhaust diffuser 62, may lead to improved turbocharger efficiency and performance, thereby reducing fuel consumption and emissions. In addition, turbine rotor 28 may be shifted axially outward in direction 89, thereby increasing the length of shaft 30 by about 15-20% to further enhance the effects of exhaust diffuser 62 and turbo casing 56 improvements. In addition, a ratio of the distance 81 to a turbine bucket height or distance 87 is about 1.4 to about 3.4.

FIG. 4 is a sectional end view of an embodiment of an improved turbocharger 12, as shown in FIG. 2. In the embodiment, turbo casing 56 is configured to direct exhaust flow toward an exhaust port 83. In the embodiment, the turbo casing 56 has an interior geometry that varies from lower section 58 to upper portion 60, e.g., area scheduling of the cross section of the cavity within turbo casing 56. Distance 90 is a radially measured distance within turbo casing 56 near lower section 58 of the torus shaped turbo casing 56. Distance 90 is less than a distance 92, which is measured within the turbo casing cavity in a radial direction approximately 90 degrees relative to distance 90 within the torus-shaped turbo casing 56. In addition, the cross sectional area at the location where distance 90 is measured may be at least approximately 30-50% less than the cross sectional area at the location distance 92 is measured. Accordingly, the volume within the turbo casing cavity expands toward an exhaust port 83 located near upper portion 60, improving and enhancing performance and efficiency of turbocharger 12. As depicted, a change in the geometry of turbo casing wall 94 illustrates the change in cross section area of the turbo casing 56. In addition, exhaust may flow from exhaust diffuser 62 downward into turbo casing 56, as shown by arrow 96. Turbo casing 56 may then route the exhaust flow in circumferential direction 98 toward upper portion 60, wherein the volume within the turbo casing 56 expands in the direction of exhaust flow. Finally, exhaust may flow through upper portion 60, as indicated by arrow 100, wherein the volume within turbo casing 56 is much larger than the volume of turbo casing 56 near lower portion 58. Cross section lines 5A-5A, 5B-5B, and 5C-5C, illustrate the planes used to create sectional views of turbo casing 56 to depict circumferential views of geometries within turbocharger 12. Specifically, line 5A-5A may be described as at a 180 degree angle to reference line 101, line 5B-5B may be described as at a 135 degree angle, and line 5C-5C may be described as at 90 degree angle.

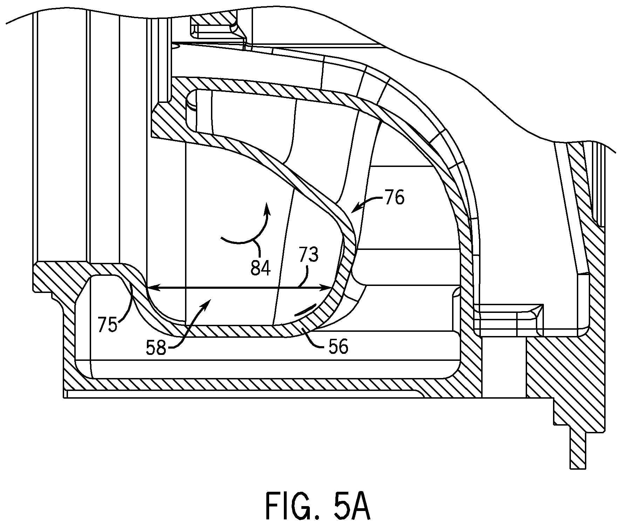

FIG. 5A is a detailed cutaway side view of an embodiment of turbo casing 56 of an improved turbocharger 12, taken along line 5A-5A of FIG. 4. In the embodiment, turbo casing 56 has a smaller cross sectional area in lower section 58, as compared to an upper section 60 of the turbocharger 12. Accordingly, distance 73 between casing walls may be less than in portions of the turbo casing 56 located near the exhaust port 83. In addition, turbo casing geometry 76 is also different than upper portions of turbo casing 56 as the turbo casing changes toward an exhaust outlet. Further, as previously described, exhaust may flow from an exhaust diffuser 62 outward and downward within the turbo casing 56 and may be redirected by the geometry 76 toward an exhaust port 83.

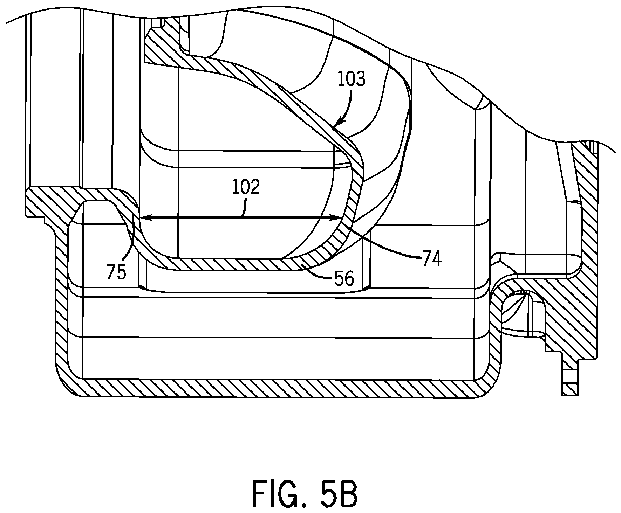

FIG. 5B is a detailed cutaway side view of an embodiment of turbo casing 56 of an improved turbocharger 12, taken along line 5B-5B of FIG. 4. As depicted, the sectional view is taken at a plane that is about 45 degrees relative to the sectional plane view of FIG. 5A. In the embodiment, turbo casing 56 has a larger cross sectional area than the cross section in lower section 58. The distance 102 between casing walls may be larger than a similar distance 73 in lower section 58. The area scheduling of the cavity within turbo casing 56 is achieved in part by the wall geometry 103, which improves exhaust flow.

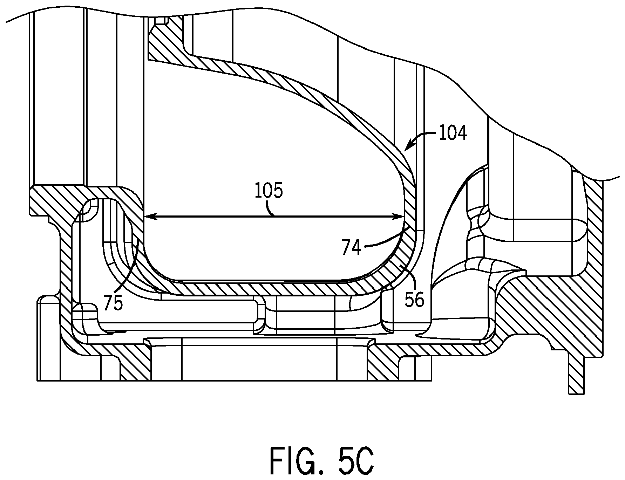

FIG. 5C is a detailed cutaway side view of an embodiment of turbo casing 56 of an improved turbocharger 12, taken along line 5C-5C of FIG. 4. As depicted, the sectional view is taken at a plane that is about 90 degrees, or perpendicular in orientation to, the sectional plane view of FIG. 5A. In the embodiment, turbo casing geometry 104 may be configured to enhance an improved exhaust flow through the turbo casing 56 by expanding the turbo casing cavity of the exhaust flows toward the exhaust port 83. As such, distance 105, between turbo walls 74 and 75 may be larger distance than distances 102 and 73 (from FIGS. 5B and 5A). The embodiment of turbo casing 56 and improved turbine stage portion 50 includes improved geometry and component orientations to enable enhanced turbocharger 12 performance, improved efficiency, improved exhaust flow, and reduced back pressure in the turbocharger system 12.

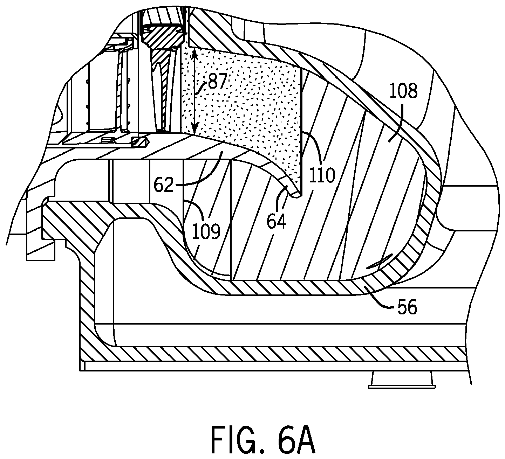

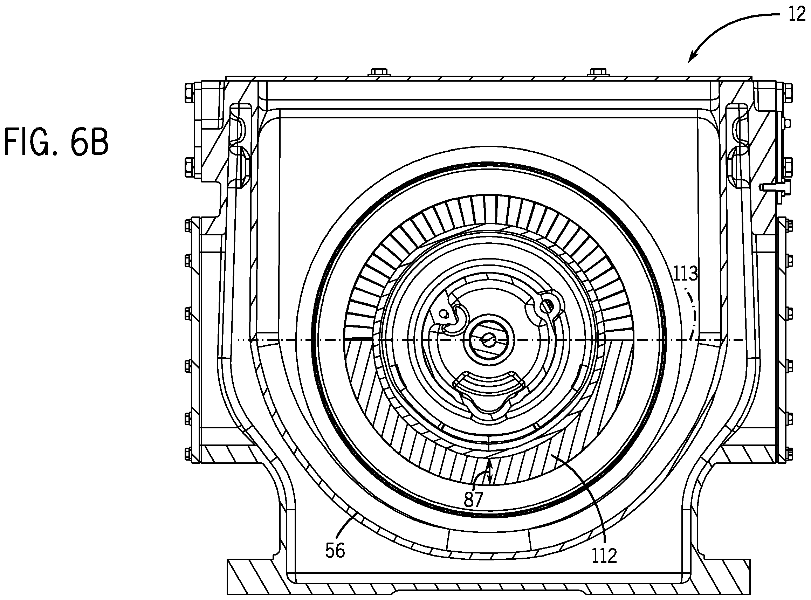

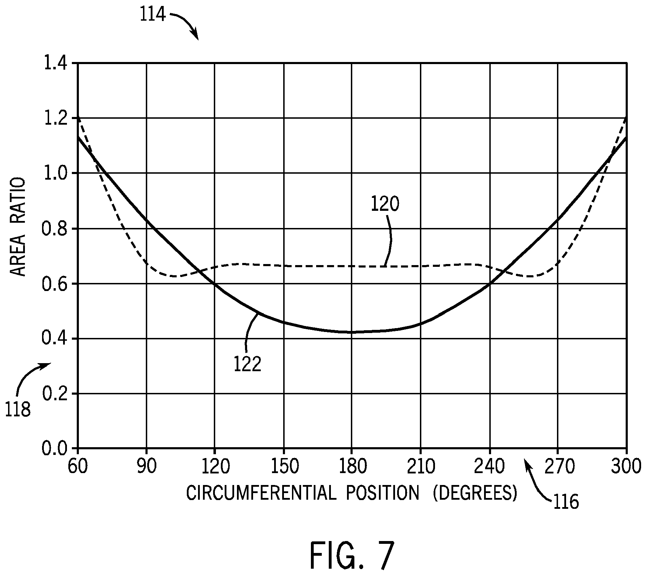

FIG. 6A is a detailed sectional side view of an embodiment of turbo casing 56 of an improved turbocharger 12. FIG. 6B is a sectional end view of an embodiment of an improved turbocharger 12. Areas shown in FIGS. 6A and 6B illustrate areas that are included in a ratio of an exhaust hood or turbine casing area to a diffuser inlet annulus area. In the embodiment shown in FIG. 6A, the sectional view is taken 180 degrees from reference line 101. At this point, turbo casing 56 may encompass a cross-sectional cavity area 108 that may be referred to as the turbo casing area. Lines 109,110, along with turbo casing 56, encompass turbo casing area 108. In FIG. 6B, a diffuser inlet annulus area 112 is illustrated, wherein the area 112 is the area of the bottom half of the inlet opening area from the buckets 66 to the diffuser 62. As depicted, the area 112 is the inlet annulus area below a line 113 that is in the center of the inlet annulus. Areas 108 and 112 may be used to illustrate the area scheduling to improve exhaust flow within turbine stage portion 50. The geometry and cross sectional area (108) of turbo casing 56 changes through the circumference of the torus-shaped cavity. Further, in an exemplary embodiment, the diffuser 62 geometry and area (112) created by the illustrated sectional view is uniform throughout the circumference of the torus-shaped cavity. Accordingly, a ratio of the turbo casing area 108 to diffuser inlet annulus area 112, taken throughout the circumference of the turbocharger 12, may be useful in illustrating the improved efficiency and flow characteristics of the turbo casing 12 design. The gradual increase of the turbo casing area 108 in the direction of exhaust flow, towards outlet 83, may be described as a non symmetrical geometry of turbo casing 56, leading to the improvements discussed below. The ratio of areas throughout the circumference of turbocharger 12 are illustrated in chart form in FIG. 7.

Specifically, FIG. 7 is a chart illustrating the above-described area ratios (e.g., area 108 to area 112) as they relate to a circumferential position where the section plane is located within improved turbocharger 12. As depicted, the chart 114 plots a circumferential position wherein the cross sectional area 108 of the turbo casing 56 is taken at various sectional planes through turbocharger 12 as illustrated in FIG. 4. Further, the ratio of the exhaust diffuser area to diffuser inlet annulus area is illustrated along axis 118. The ratio plotted in chart 114 is turbo casing area 108 at each cross section along the circumference of the turbocharger 12 divided by the constant diffuser inlet annulus area 112. Line 120 is a plot of area ratio data from an embodiment of a turbocharger stage portion that does not feature the improved turbo casing design and therefore has a less gradual change in cross sectional area (108 in FIG. 6A), which can cause significant flow losses. Line 122 illustrates the area ratio (e.g., 108 to 112) and its gradual change of cross sectional area for the exhaust turbine casing as plotted against the position within the turbocharger 12 relative to reference line 101. In addition, area 112 is a constant value for both lines 120 and 122.

As depicted, the circumferential position 116 (e.g., horizontal axis) are data points taken between the 60 degree plane and the 300 degree plane relative to a plane through reference line 101 (FIG. 4). In the chart 114, the 60 degree data points are a ratio of area measurements taken through a plane 60 degrees in a clockwise direction relative to a plane through line 101. The 90 degree data points are a ratio of area measurements taken through a plane about 90 degrees clockwise to the plane through line 101. In addition, the data points at 300 degrees are area measurements taken at 300 degrees in a clockwise direction relative to the plane through line 101. As shown, the gradual change in area ratio (e.g., 108 to 112) within the turbo casing 56, shown by line 122, allows for a gradual volume expansion and therefore a smoother flow of exhaust through the turbo casing, thereby improving flow and turbocharger performance. Conversely, line 120 shows an alternative turbo design with abrupt changes in area ratios, as shown near 90 and 270 degree data points, resulting in less efficient and less smooth exhaust flow. For the gradual change illustrated by line 122, the area ratio 118 may be characterized as an area ratio change of about 8% to about 30% per 30 degrees, between the circumferential positions of 180 to 300 degrees in a clockwise direction. Further, plot 122 of the area ratios 118, taken at circumferential locations 116 in counterclockwise directions between 60 and 300 degrees, relative to vertical plane through line 101 of the turbo casing 56 may vary between about 0.42 and about 1.15.

In the depicted arrangement, turbo casing 56 is disposed downstream from the exhaust diffuser 62, wherein the turbo-casing comprises a torus-shaped chamber leading to an exhaust outlet 83. In addition, the torus-shaped chamber has a cross-sectional area that progressively increases by at least about 40 percent from about the 180 degrees position to about the 270 degree position in an annular direction toward the exhaust outlet 83. Further, the progressive increase in cross-sectional area is represented by the area ratio plot 122 non symmetrical torus-shaped chamber between about 60 and about 300 degrees relative to a vertical plane centered through line 101, wherein the area ratio plot 122 varies between about 0.42 and about 1.15.

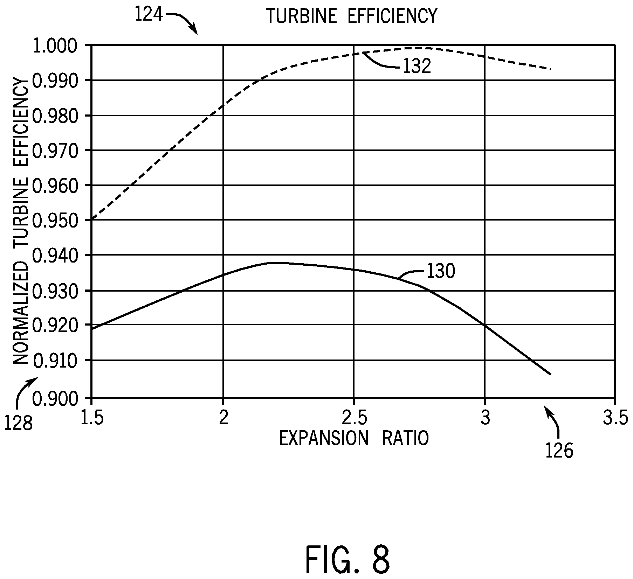

FIG. 8 is a chart of normalized turbine efficiency plotted against expansion ratio for a turbocharger system. The expansion ratio may be described as a turbine inlet pressure divided by a turbine exit pressure in absolute terms. The expansion ratio measurements may be taken at transition section 72 (turbine inlet pressure) and exhaust outlet 83 (turbine outlet pressure). Expansion ratio is an input to FIG. 8 which can be used to identify the operation of a turbine, the benefit is shown on the vertical axis using the normalized turbine efficiency. In chart 124, a normalized turbine efficiency 128 is plotted against expansion ratio 126, thereby showing turbocharger 12 performance improvements as discussed above. Normalized turbine efficiency 128 is a way to compare the level of actual turbine performance to peak turbine performance at various expansion ratios by dividing the actual turbine efficiency of the turbo design by the peak turbine efficiency of the improved turbo. Accordingly, data plot 130 illustrates a design of a turbocharger 12 with an exhaust diffuser and turbo casing which does not include the improved components that have been optimized for exhaust flow. In contrast, data plot 132 illustrates the improved turbocharger efficiency achieved by the previously illustrated optimized turbo casing design and exhaust diffuser along with other turbine stage 50 components.

As depicted, the peak turbine efficiency of the improved turbo 132 occurs at an expansion ratio of about 2.7, which is a normalized turbine efficiency of 1. A comparison of data plots 130 and 132 illustrate that the improved turbocharger 12 components, as discussed above, may result in optimal and improved turbocharger efficiency. Specifically, the gradual geometry changes in turbo casing 56 and improvements in the bell shaped exhaust diffuser 62 provide improved exhaust flow and efficiency through area scheduling within the turbocharger 12. As shown in the chart 124, at low expansion ratios (1.5 for example), the improved turbine 132 resulted in about 3% improvement and at higher expansion ratios (3 for example), the improved turbine 132 resulted in about 8% improvement.

## Claims

1. A turbocharger (12), comprising:
a compressor (26) comprising compressor blades;
a turbine (28) comprising turbine blades;
a shaft (30) coupling the compressor (26) to the turbine (28); and
an exhaust diffuser (62) disposed downstream from the turbine blades, wherein the exhaust diffuser comprises a bell mouth (64);
a turbo-casing (56) disposed downstream from the exhaust diffuser (62), wherein the turbo-casing comprises a annular chamber leading to an exhaust outlet (83) disposed on and centered on a second side opposite from a first side, the annular chamber having a cross-sectional area (108) that is defined as an area bounded by a first line (110) extending radially from a tip of the bell mouth (64) to a first location along an interior casing wall, by a second line (109) extending radially from a leading edge of a bucket base to a second location along the interior casing wall, by a surface of the bell mouth (64) extending between the second line (109) and the tip of the bell mouth (64), and by the interior casing wall extending between the first line (110) and the second line (109), the turbocharger **characterized in that** the cross-sectional area (108) progressively increasing by at least about 40 percent from a center of the first side in about the first 90 degrees in an annular direction toward the exhaust outlet (83) in the second side.

2. The turbocharger of claim 1, wherein the progressive increase in cross-sectional area is represented by an area ratio of the cross-sectional area of the annular chamber divided by a diffuser area of the bell mouth (64), and the area ratio is taken through planes at circumferential locations in a counterclockwise annular direction between about 60 and about 300 degrees relative to a vertical plane centered through the exhaust outlet in the second side, wherein the area ratio varies between about 0.42 and about 1.15.

3. The turbocharger of claim 1, wherein a ratio of a length of the bell mouth (64) in an axial direction to a turbine bucket height in direction generally crosswise to the bell mouth length is about 1.4 to about 3.4.

4. The turbocharger of claim 1, wherein the turbo casing (56) expands in volume in a circumferential direction of flow through an annular chamber to an exhaust outlet.

5. The turbocharger of claim 1, wherein an angle (77) of an interior wall of the second side of the turbo casing (56) is oriented at about 75 to 80 degrees relative to a length of an axis through the shaft.

6. The turbocharger of claim 1, wherein the bell mouth (64) extends into the annular chamber about 30-50% of a first distance across the second side of the annular chamber the distance of the width of the turbo casing (56) in a direction parallel to an axis of the shaft.

7. The turbocharger of claim 1, comprising an engine coupled to the turbocharger system.

8. The turbocharger of claim 1, wherein the turbine is configured to create a cavity within the turbo casing with a non symmetrical geometry.

9. The turbocharger of claim 1, wherein the turbo casing comprises an annular cavity.

## Patentansprüche

1. Turbolader (12), umfassend:
einen Verdichter (26), der Verdichterblätter umfasst;
eine Turbine (28), die Turbinenblätter umfasst;
eine Welle (30), die den Verdichter (26) an die Turbine (28) koppelt; und
einen Abgasdiffusor (62), der den Turbinenblättern nachgelagert angeordnet ist, wobei der Abgasdiffusor eine glockenförmige Düse (64) umfasst;
ein Turbogehäuse (56), das dem Abgasdiffusor (62) nachgelagert angeordnet ist, wobei das Turbogehäuse eine ringförmige Kammer umfasst, die zu einem Abgasauslass (83) führt, der auf und zentriert auf einer zweiten Seite, die einer ersten Seite gegenüberliegt, angeordnet ist, wobei die ringförmige Kammer eine Querschnittsfläche (108) aufweist, die als eine Fläche definiert ist, die eingegrenzt ist von einer ersten Linie (110), die sich radial von einer Spitze der glockenförmigen Düse (64) zu einer ersten Stelle entlang einer inneren Gehäusewand erstreckt, von einer zweiten Linie (109), die sich radial von einer führenden Kante einer Schaufelbasis zu einer zweiten Stelle entlang der inneren Gehäusewand erstreckt, von einer Oberfläche der glockenförmigen Düse (64), die sich zwischen der zweiten Linie (109) und der Spitze der glockenförmigen Düse (64) erstreckt, und von einer inneren Gehäusewand, die sich zwischen der ersten Linie (110) und der zweiten Linie (109) erstreckt, wobei der Turbolader **dadurch gekennzeichnet ist, dass** die Querschnittsfläche (108) fortschreitend von einem Mittelpunkt der ersten Seite in etwa den ersten 90 Grad in eine ringförmige Richtung zum Abgasauslass (83) in der zweiten Seite hin um mindestens etwa 40 Prozent zunimmt.

2. Turbolader nach Anspruch 1, wobei die fortschreitende Zunahme in der Querschnittsfläche als ein Flächenverhältnis der Querschnittsfläche zur ringförmigen Kammer geteilt durch eine Diffusorfläche der glockenförmigen Düse (64) dargestellt ist, und das Flächenverhältnis durch Ebenen an Umfangsstellen in einer gegen den Uhrzeigersinn verlaufenden ringförmigen Richtung zwischen etwa 60 und etwa 300 Grad relativ zu einer senkrechten Ebene, die durch den Abgasauslass in der zweiten Seite zentriert ist, genommen wird, wobei das Flächenverhältnis zwischen etwa 0,42 und etwa 1,15 variiert.

3. Turbolader nach Anspruch 1, wobei ein Verhältnis einer Länge der glockenförmigen Düse (64) in einer axialen Richtung zu einer Turbinenschaufelhöhe in zur glockenförmigen Düsenlänge allgemein quer verlaufenden Richtung etwa 1,4 bis etwa 3,4 beträgt.

4. Turbolader nach Anspruch 1, wobei das Turbogehäuse (56) sein Volumen in einer Strömungsumfangsrichtung durch eine ringförmige Kammer zu einem Abgasauslass ausdehnt.

5. Turbolader nach Anspruch 1, wobei ein Winkel (77) einer inneren Wand der zweiten Seite des Turbogehäuses (56) relativ zu einer Länge einer Achse durch die Welle bei etwa 75 bis 80 Grad ausgerichtet ist.

6. Turbolader nach Anspruch 1, wobei die glockenförmige Düse (64) sich in die ringförmige Kammer etwa 30-50 % einer ersten Distanz durch die zweite Seite der ringförmigen Kammer die Distanz der Weite des Turbogehäuses (56) in eine Richtung parallel zu einer Achse der Welle erstreckt.

7. Turbolader nach Anspruch 1, umfassend einen Motor, der an das Turboladersystem gekoppelt ist.

8. Turbolader nach Anspruch 1, wobei die Turbine konfiguriert ist, um einen Hohlraum innerhalb des Turbogehäuses mit einer nicht symmetrischen Geometrie zu erzeugen.

9. Turbolader nach Anspruch 1, wobei das Turbogehäuse einen ringförmigen Hohlraum umfasst.

## Revendications

1. Turbocompresseur (12), comprenant :
un compresseur (26) comprenant des pales de compresseur ;
une turbine (28) comprenant des pales de turbine ;
un arbre (30) couplant le compresseur (26) à la turbine (28) ; et
un diffuseur d'échappement (62) disposé en aval des pales de turbine, dans lequel le diffuseur d'échappement comprend un pavillon (64) ;
un turbo-carter (56) disposé en aval du diffuseur d'échappement (62), dans lequel le turbo-carter comprend une chambre annulaire menant à une sortie d'échappement (83) disposée sur, et centrée sur un deuxième côté opposé par rapport à un premier côté, la chambre annulaire ayant une aire en coupe transversale (108) qui est définie en tant qu'aire délimitée par une première ligne (110) s'étendant radialement depuis un bout du pavillon (64) jusqu'à un premier emplacement le long d'une paroi intérieure de carter, par une deuxième ligne (109) s'étendant radialement depuis un bord d'attaque d'une base d'aube jusqu'à un second emplacement le long de la paroi intérieure de carter, par une surface du pavillon (64) s'étendant entre la deuxième ligne (109) et le bout du pavillon (64), et par la paroi intérieure de carter s'étendant entre la première ligne (110) et la deuxième ligne (109), le turbocompresseur **caractérisé en ce que**
l'aire en coupe transversale (108) augmente progressivement d'au moins environ 40 pour cent depuis un centre du premier côté dans les 90 premiers degrés environ dans une direction annulaire allant vers la sortie d'échappement (83) dans le deuxième côté.

2. Turbocompresseur selon la revendication 1, dans lequel l'augmentation progressive d'aire en coupe transversale est représentée par un rapport d'aire de l'aire en coupe transversale de la chambre annulaire divisée par une aire de diffuseur du pavillon (64), et le rapport d'aire est pris à travers des plans à des emplacements circonférentiels dans une direction annulaire antihoraire entre environ 60 et environ 300 degrés par rapport à un plan vertical centré à travers la sortie d'échappement dans le deuxième côté, dans lequel le rapport d'aire varie entre environ 0,42 et environ 1,15.

3. Turbocompresseur selon la revendication 1, dans lequel un rapport d'une longueur du pavillon (64) dans une direction axiale à une hauteur d'aube de turbine dans une direction généralement transversale à la longueur de pavillon va d'environ 1,4 à environ 3,4.

4. Turbocompresseur selon la revendication 1, dans lequel le turbo-carter (56) subit une expansion en volume dans une direction circonférentielle d'écoulement à travers une chambre annulaire jusqu'à une sortie d'échappement.

5. Turbocompresseur selon la revendication 1, dans lequel un angle (77) d'une paroi intérieure du deuxième côté du turbo-carter (56) est orienté à environ 75 à 80 degrés par rapport à une longueur d'un axe à travers l'arbre.

6. Turbocompresseur selon la revendication 1, dans lequel le pavillon (64) s'étend dans la chambre annulaire d'environ 30 à 50 % d'une première distance à travers le deuxième côté de la chambre annulaire, la distance de la largeur du turbo-carter (56) dans une direction parallèle à un axe de l'arbre.

7. Turbocompresseur selon la revendication 1, comprenant un moteur couplé au système de turbocompresseur.

8. Turbocompresseur selon la revendication 1, dans lequel la turbine est configurée pour créer une cavité au sein du turbo-carter avec une géométrie non symétrique.

9. Turbocompresseur selon la revendication 1, dans lequel le turbo-carter comprend une cavité annulaire.
